# EUROPÄISCHE PATENTSCHRIFT

(11) **EP 1 480 414 B1**
(45) Veröffentlichungstag und Bekanntmachung des Hinweises auf die Patenterteilung: **17.12.2008**
(21) Anmeldenummer: 04101221.2
(22) Anmeldetag: 24.03.2004
(51) Int. Cl.: H04L 29/06, H04L 29/12

(54) **Verfahren und System zum Zuordnen von Diensteanbietern zu Telematikendgeräten**
Method and System to associate service providers to telematic terminals
Procédé et système pour l'attribution des fournisseurs de contenu aux terminaux télématiques

(30) Priorität: 20.05.2003 DE 10322558
(43) Veröffentlichungstag der Anmeldung: 24.11.2004
(73) Patentinhaber: ROBERT BOSCH GMBH, 70442 Stuttgart (DE)
(72) Erfinder: Friedrichs, Arne, 38114, Braunschweig (DE); Draeger, Gerd, 38102, Braunschweig (DE); Skwarek, Volker, 31162, Bad Salzdetfurth (DE)

(56) Entgegenhaltungen:
- EP-A- 1 128 163
- WO-A-01/50792
- DE-A1- 19 651 146

## Beschreibung

### Technisches Gebiet

Die vorliegende Erfindung betrifft das technische Gebiet des Zuordnens von Diensteanbietern zu Telematikendgeräten.

Die vorliegende Erfindung betrifft insbesondere ein Verfahren zum Zuordnen mindestens eines Diensteanbieters zu mindestens einem Telematikendgerät sowie insbesondere ein System, das vorzugsweise auf dem Verfahren beruht.

### Stand der Technik

Mittels sogenannter Telematikendgeräte können in ein mobiles Fortbewegungsmittel, insbesondere in ein mobiles Kraftfahrzeug, übertragene Daten, Informationen und/oder Meldungen empfangen und/oder aufgenommen werden. Bei diesen Daten, Informationen und/oder Meldungen handelt es sich üblicherweise um Dienste, die von Diensteanbietern (sogenannte S[ervice]P[rovider]) in aufbereiteter Form vorgehalten, angeboten und vertrieben werden.

Hierbei wird konventionellerweise eine der beiden nachstehend dargelegten Verfahrensweisen angewendet:
[a] Die Aufrufadressen oder Diensteadressen von aus dem Fortbewegungsmittel aufzurufenden Diensten sind im Telematikendgerät kodiert. Bei einer Diensteanfrage (= bei einem Diensteaufruf) wird der entsprechende Dienst bzw. werden die entsprechenden Dienste über die Aufrufadresse(n) oder Diensteadresse(n) aktiviert.
   Nachteilig ist in diesem Zusammenhang allerdings, daß eine Änderung der Aufrufadresse(n) oder Diensteadresse(n) nur mittels einer manuell durchzuführenden Änderung im Telematikendgerät möglich ist.
[b] Ein mit einer Zuordnungsdatenbank ausgestatteter sogenannter zentraler Diensteverdichter oder zentraler Serviceverdichter (sogenannter S[ervice]A[ggregator]) empfängt alle Diensteanfragen bzw. alle Diensteaufrufe der Telematikendgeräte und leitet diese Diensteanfragen bzw. diese Diensteaufrufe an die jeweils korrekten bzw. zuständigen Diensteanbieter weiter.

Nachteilig ist in diesem Zusammenhang allerdings, daß bei einem Ausfall des Serviceverdichters auf keinen Dienst mehr zugegriffen werden kann.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art sowie ein System der eingangs genannten Art so weiterzuentwickeln, daß
- zum einen eine Änderung der Aufrufadresse(n) oder Diensteadresse(n) automatisch im Telematikendgerät erfolgen kann und
- zum anderen bei einem Ausfall der Zuordnungsdatenbank bzw. des Dienste- oder Serviceverdichters weiterhin auf die Dienste zugegriffen werden kann.

Diese Aufgabe wird gemäß der Lehre der vorliegenden Erfindung durch ein Verfahren mit den im Anspruch 1 genannten Merkmalen, einem Apparateanspruch gemäß Anspruch 7, sowie durch ein System mit den im Anspruch 8 genannten Merkmalen gelöst. Vorteilhafte Ausgestaltungen und zweckmäßige Weiterbildungen der vorliegenden Erfindung sind in den jeweiligen Unteransprüchen gekennzeichnet.

Mithin liegt der Kern der vorliegenden Erfindung in einer dynamischen Zuordnung von Diensteanbietern zu Telematikendgeräten, wie etwa zu Fahrerassistenzsystemen, zu Handhelds, zu Mobiltelephonen, zu Navigationsgeräten, zu Palmtops, zu P[ersonal]D[igital]A[ssistant]s oder zu dergleichen.

Das Verfahren gemäß der vorliegenden Erfindung sowie das System gemäß der vorliegenden Erfindung kombinieren hierbei die Vorteile der beiden eingangs aufgeführten Prinzipien [a] und [b], indem im Telematikendgerät
- sowohl die Adresse mindestens einer mit mindestens einer Zuordnungsdatenbank versehenen Servereinheit (= insbesondere zentraler Diensteverdichter oder insbesondere zentraler Serviceverdichter = sogenannter S[ervice]A[ggregator])
- als auch die Adresse mindestens eines Diensteanbieters (sogenannter S[ervice]P[roviders]), insbesondere aller Diensteanbieter,
vorgehalten werden.

In erfindungswesentlicher Weise wird beim Verfahren gemäß der vorliegenden Erfindung bei der Anfrage bzw. beim Aufruf eines Dienstes durch das Telematikendgerät zunächst der Serviceverdichter, und hierbei insbesondere die Zuordnungsdatenbank im Serviceverdichter, kontaktiert.

In zweckmäßiger Weise leitet aber der Serviceverdichter nicht die vollständige (Dienste-)Anfrage bzw. den vollständigen Diensteaufruf an die richtige (Dienste-)Adresse des für den angefragten Dienst zutreffenden Diensteanbieters weiter, sondern übermittelt die korrekte (Dienste-)Adresse des für den angefragten Dienst zutreffenden Diensteanbieters vorzugsweise an das Telematikendgerät für eine eigene Anfrage bzw. für einen eigenen Aufruf durch das Telematikendgerät zurück.

Mithin wird das Telematikendgerät in vorteilhafter Weise in die Lage versetzt, selbsttätig beim für den angefragten Dienst zutreffenden Diensteanbieter anzufragen, das heißt das Telematikendgerät stellt dann selbst die Diensteanfrage bzw. den Diensteaufruf an den von der Zuordnungsdatenbank des Serviceverdichters benannten Diensteanbieter.

Das vorstehend dargelegte Vorgehen, und hierbei insbesondere die Tatsache, daß im Telematikendgerät nicht nur die Zuordnungsdatenbankadresse der Zuordnungsdatenbank, sondern auch die jeweilige Diensteadresse vorzugsweise aller dem Telematikendgerät zugeordneten Diensteanbieter zur Verfügung stehen, hat den Vorteil, daß bei einem Ausfall des Serviceverdichters, und demzufolge insbesondere bei einem Ausfall der Zuordnungsdatenbank im Serviceverdichter, vom Telematikendgerät alle (Dienste-)Anfragen bzw. alle (Dienste-)Aufrufe an den Diensteanbieter gestellt werden, der im Telematikendgerät gespeichert ist.

Dies bedeutet, daß im Falle eines Ausfalls des Serviceverdichters, und demzufolge insbesondere im Falle eines Ausfalls der Zuordnungsdatenbank im Serviceverdichter, weiterhin Dienste für das Telematikendgerät zur Verfügung stehen, denn dann ist der entsprechende Diensteanbieter direkt bekannt und kann demzufolge vom Telematikendgerät angesprochen werden.

Unabhängig hiervon oder in Verbindung hiermit besteht gemäß einer besonders erfinderischen Weiterbildung des vorliegenden Verfahrens wie auch des vorliegenden Systems die Möglichkeit, neben den Adreßdaten der Diensteanbieter auch weitere Daten, Informationen und/oder Meldungen fernzukonfigurieren:
- Beispielsweise kann anhand der an den Serviceverdichter übermittelten Versionsnummer der Software vom Serviceverdichter eine Information hinsichtlich des Vorliegens eines oder mehrerer Updates für die Software eingespielt werden.
- In einem sich im Ausland befindlichen Telematikendgerät können neue, für das fremde Land gültige Einwahladressen und/oder Einwahlnummern konfiguriert werden.

Die vorliegende Erfindung betrifft des weiteren ein Telematikendgerät, wie etwa ein Fahrerassistenzsystem, ein Handheld, ein Mobiltelephon, ein Navigationsgerät, einen Palmtop, einen P[ersonal]D[igital]A[ssistant] oder dergleichen, insbesondere zum Durchführen eines Verfahrens gemäß der vorstehend dargelegten Art, welchem Telematikendgerät mindestens ein Diensteanbieter zuordbar ist, wobei im Telematikendgerät, insbesondere in mindestens einer Speichereinheit des Telematikendgeräts,
- sowohl die Zuordnungsdatenbankadresse mindestens einer Zuordnungsdatenbank, mittels derer der Diensteanbieter dem Telematikendgerät zuordbar ist,
- als auch die Diensteadresse mindestens eines Diensteanbieters, insbesondere die Diensteadressen sämtlicher dem Telematikendgerät zuordbarer Diensteanbieter,
zur Verfügung stehen.

Die vorliegende Erfindung betrifft schließlich die Verwendung mindestens eines Telematikendgeräts gemäß der vorstehend dargelegten Art als Teil mindestens eines einem Fortbewegungsmittel, insbesondere einem Kraftfahrzeug, zugeordneten Navigationssystems.

### Kurze Beschreibung der Zeichnungen

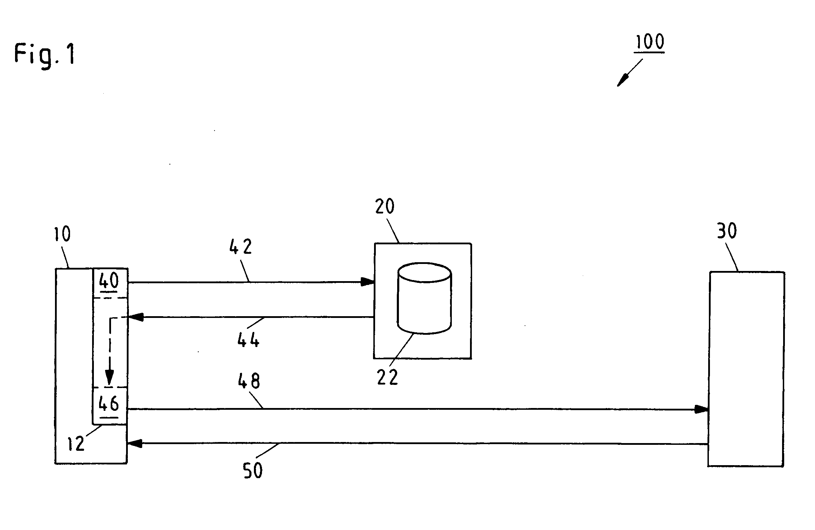

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 8 nachgeordneten Ansprüche verwiesen, andererseits werden weitere Ausgestaltungen, Merkmale und Vorteile der vorliegenden Erfindung nachstehend anhand der drei durch die Figuren 1 bis 3 veranschaulichten Ausführungsbeispiele näher erläutert.

Es zeigt:
- Fig. 1: in schematischer Prinzipdarstellung ein erstes Ausführungsbeispiel für ein System gemäß der vorliegenden Erfindung, das gemäß dem Verfahren gemäß der vorliegenden Erfindung funktioniert;
- Fig. 2: in schematischer Prinzipdarstellung ein zweites Ausführungsbeispiel für ein System gemäß der vorliegenden Erfindung, das gemäß dem Verfahren gemäß der vorliegenden Erfindung funktioniert; und
- Fig. 3: in schematischer Prinzipdarstellung ein erstes Ausführungsbeispiel für ein System gemäß der vorliegenden Erfindung, das gemäß dem Verfahren gemäß der vorliegenden Erfindung funktioniert.

### Bester Weg zur Ausführung der Erfindung

In den Figuren 1, 2 und 3 wird das Funktionsprinzip eines Systems 100 zum Zuordnen von Diensteanbietern 30 zu Telematikendgeräten 10, wie etwa zu Fahrerassistenzsystemen, zu Handhelds, zu Mobiltelephonen, zu Navigationsgeräten, zu Palmtops, zu P[ersonal]D[igital]A[ssistant]s oder zu dergleichen, anhand dreier Ausführungsbeispiele erläutert.

Diese drei Ausführungsbeispiele bzw. deren Funktionsprinzip beruhen auf einem Verfahren zur serverbasierten dynamischen Konfiguration der Telematikendgeräte 10, wobei sich die drei Ausführungsbeispiele auf verschiedene prinzipielle, im Rahmen der vorliegenden Erfindung liegende Kommunikationsabläufe
- zwischen dem Telematikendgerät 10,
- dem in Form eines sogenannten Diensteverdichters oder Serviceverdichters (= sogenannter S[ervice]A[ggregator]) ausgebildeten Servers 20 (<--> vorstehend erwähnte "serverbasierte dynamische Konfiguration der Telematikendgeräte 10") und
- dem Diensteanbieter 30 (= sogenannter S[ervice]P[rovider]) beziehen.

Beim ersten Ausführungsbeispiel gemäß Figur 1 stellt das Telematikendgerät 10 bei einer Dienstevoranfrage (= Dienstevoraufruf 42) die Verbindung zu einer Zuordnungsdatenbank 22 in der Servereinheit 20 her, wobei die Adresse 40 der Zuordnungsdatenbank 22 in einer Speichereinheit 12 des Telematikendgeräts 10 vorgehalten wird.

Mittels der Zuordnungsdatenbank 22 kann der Diensteanbieter 30 dem Telematikendgerät 10 eindeutig zugeordnet werden; die Zuordnungsdatenbankadresse 40 dient dazu, daß das Telematikendgerät 10 die Zuordnungsdatenbank 22 und damit den Server 20 zutreffend adressieren und ansprechen kann.

Mit der Dienstevoranfrage bzw. mit dem Dienstevoraufruf 42 übermittelt das Telematikendgerät 10 dem Server 20 beispielsweise Informationen über den Dienstetyp, über den Endgerätetyp, über die Versionsnummer und über dergleichen.

Der der Servereinheit 20 zugeordnete Diensteverdichter oder Serviceverdichter liefert dem Endgerät 10 die (Dienste-)Adresse 44 des der Dienstevoranfrage bzw. dem Dienstevoraufruf 42 entsprechenden Diensteanbieters 30 für den vom Telematikendgerät 10 angeforderten Dienst.

Das Telematikendgerät 10 speichert diese Diensteadresse 44 für diesen Dienst in der Speichereinheit 12 anstelle der bislang in der Speichereinheit 12 bereitgehaltenen Diensteadresse 46 ab und fragt den angeforderten Dienst unter dieser Adresse 44 an.

Nachdem vorstehend der prinzipielle Kommunikationsablauf zwischen den am ersten Ausführungsbeispiel gemäß Figur 1 beteiligten Komponenten 10, 20, 30 dargelegt wurde, wird dieser prinzipielle Kommunikationsablauf nachstehend in einer praktischen Ausgestaltungsform dargelegt:

Hierzu ruft der Nutzer des Telematikendgeräts 10, das das Verfahren gemäß der vorliegenden Erfindung unterstützt, den Dienst "Off-Board-Navigation" auf. Dieser Dienst "Off-Board-Navigation" würde sich konventionellerweise im produktionsgemäßen Zustand des Endgeräts 10 mit dem unter dem U[nique]R[esource]L[ocator] http://www.abc.de erreichbaren S[ervice]P[rovider] 30 verbinden und dort die Off-Board-Navigation abrufen.

Mithin wird die in der Speichereinheit 12 des Telematikendgeräts 10 vorgehaltene Diensteadresse 46 im vorliegenden Falle durch den U[nique]R[esource]L[ocator] http://www.abc.de repräsentiert.

Nach dem Verfahren gemäß der vorliegenden Erfindung ruft dieser Dienst "Off-Board-Navigation" zunächst den unter dem U[nique]R[esource]L[ocator] http://www.bp-server.de erreichbaren serverbasierten S[ervice]A[ggregator] 20 auf und sendet diesem Server 20 die Daten "Dienst 78, Endgerät 12345, Software 90".

Diese Daten entschlüsselt der S[ervice]A[ggregator] 20 als ein Telematikgerät 10 des Vertreibers "Berta", mit dem vertraglich vereinbart ist, daß der "Dienst 78" (= Off-Board-Navigation) nicht bei der im Telematikendgerät 10 ursprünglich vorgehaltenen Diensteadresse 46 (= http://www.abc.de), sondern bei der von der Zuordnungsdatenbank 22 des S[ervice]A[ggregators] 20 übermittelten neuen Diensteadresse 44 (=U[nique]R[esource]L[ocator] http://www.fqh.de abzurufen ist.

Daraufhin wird eine Rekonfigurationsmitteilung mit der neuen Diensteadresse 44 an das Endgerät 10 gesendet, mit der der "Dienst 78" (= Off-Board-Navigation) beim unter dem U[nique]R[esource]L[ocator] http://www.fqh.de erreichbaren S[ervice]P[rovider] 30 angefragt wird (--> eigentliche Diensteanfrage oder eigentlicher Diensteaufruf 48), woraufhin das reguläre Diensteergebnis 50 vom Diensteanbieter 30 an das Telematikendgerät 10 übermittelt wird.

Weiterhin wird die manuelle Adreßumstellung gesperrt.

Da mittlerweile ein Softwarerelease mit der Versionsnummer 91 existiert, wird der Führer des Kraftfahrzeugs, dem das Telematikendgerät 10 zugeordnet ist, darüber informiert, daß anstelle der benutzten Software mit der Versionsnummer 90 nunmehr eine neue Software mit der Versionsnummer 91 verfügbar ist und daß die alte Version 90 der Software nur noch sechs Wochen unterstützt wird.

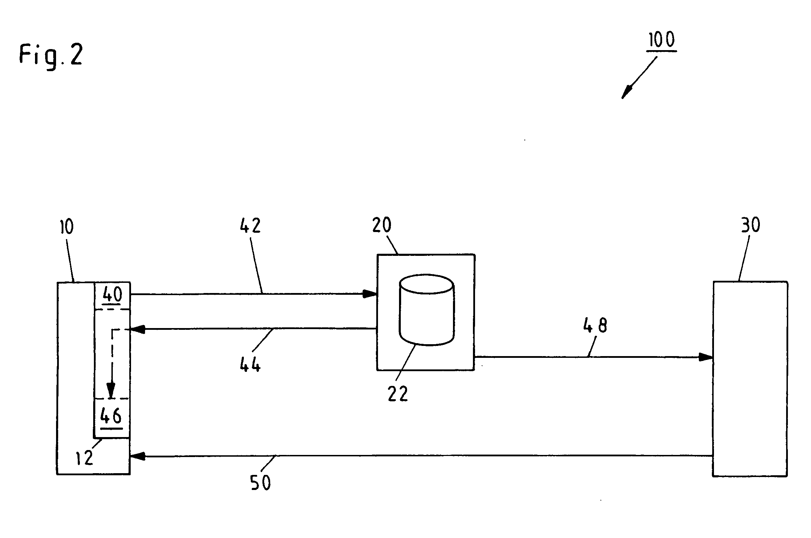

Beim zweiten Ausführungsbeispiel gemäß Figur 2 erfolgt insoweit ein zum ersten Ausführungsbeispiel gemäß Figur 1 alternativer Kommunikationsablauf zwischen Telematikendgerät 10, S[ervice]A[ggregator] 20 und S[ervice]P[rovider] 30, als in einer vorteilhaften Erweiterung die von der Zuordnungsdatenbank 22 des S[ervice]A[ggregators] 20 übermittelte (Dienste-)Adresse 44 nur dann in der Speichereinheit 12 des Telematikendgeräts 10 automatisch gespeichert wird, wenn sich diese vom S[ervice]A[ggregator] 20 mitgeteilte Diensteadresse 44 gegenüber der schon bekannten, in der Speichereinheit 12 des Telematikendgeräts 10 vorgehaltenen Diensteadresse 46 geändert hat.

Idealerweise muß die Dienstevoranfrage oder der Dienstevoraufruf 42 an den S[ervice]A[ggregator] 20 nicht bei jeder Diensteanfrage bzw. bei jedem Diensteaufruf 48 durchgeführt werden, sondern es genügen bestimmte Intervalle für die Dienstevoranfrage oder für den Dienstevoraufruf 42, wie etwa
- jede zehnte Anfrage oder
- jeder 50. Aufruf eines bestimmten Dienstes oder
- einmal im Monat oder
- alle 42 Tage.

Der vorstehend bereits erwähnte Nutzer des Telematikendgeräts 10 kennt die besonderen Eigenschaften seines Telematikendgeräts 10 und weiß aus diesem Grunde, daß das Telematikendgerät 10 erst wieder nach einem bestimmten zeitlichen Intervall, zum Beispiel in 42 Tagen, eine neue (Vor-)Anfrage bzw. einen neuen (Vor-)Aufruf 42 beim S[ervice]A[ggregator] zur Rekonfiguration stellen würde.

Da sich der Nutzer aber gerade auf Geschäftsreise im Ausland, nämlich in Italien befindet, möchte der Nutzer nicht immer die Telephongebühren für ein internationales Gespräch zum deutschen Einwahlportal bezahlen. Folglich stellt der Nutzer manuell eine neue Konfigurationsanfrage und sendet die aktuellen Standortkoordinaten in der Mitteilung 42 mit.

Der S[ervice]A[ggregator] ermittelt aus diesen aktuellen Standortkoordinaten den derzeitigen Standort "Italien" und konfiguriert die Telephonnummer zur landesbezogenen Einwahl neu, wodurch erhebliche Kosten eingespart werden und eine reibungslose Einwahl in das italienische Einwahlportal gewährleistet ist.

Beim zweiten Ausführungsbeispiel gemäß Figur 2 besteht insofern eine weitere modifizierte Ausführung im Vergleich zum ersten Ausführungsbeispiel gemäß Figur 1, als durch den S[ervice]A[ggregator] 20 eine Weiterleitung der Dienstevoranfrage bzw. des Dienstevoraufrufs 42 an den S[ervice]P[rovider] 30 erfolgt.

Dies bedeutet in zweckmäßiger Weise, daß die Anfrage bzw. der Aufruf des Endgeräts 10 über den S[ervice]A[ggregator] 20 an den S[ervice]P[rovider] 30 vom S[ervice]A[ggregator] 20 mit der korrekten Adresse 44 des S[ervice]P[roviders] 30 beantwortet wird, die Anfrage bzw. der Aufruf selbst aber in Form der eigentlichen Diensteanfrage bzw. des eigentlichen Diensteaufrufs 48 über den S[ervice]A[ggregator] 20 umgeleitet oder unmittelbar an den S[ervice]P[rovider] 30 weitergeleitet wird, woraufhin das Diensteergebnis 50 vom Diensteanbieter 30 an das Telematikendgerät 10 übermittelt wird.

Dies hat den Vorteil, daß dem Telematikendgerät 10 zwar mittels der Mitteilung 44 die neuen Konfigurationsdaten mitgeteilt werden (<--> vorstehend erwähntes "serverbasiertes dynamisches Konfigurieren des Telematikendgeräts 10"), dieses Telematikendgerät 10 aber keine zweite Anfrage bzw. keinen zweiten Aufruf 48 mehr starten muß, denn diese zweite Anfrage bzw. dieser zweite Aufruf 48 geht beim zweiten Ausführungsbeispiel gemäß Figur 2 direkt vom S[ervice]A[ggregator] 20 aus.

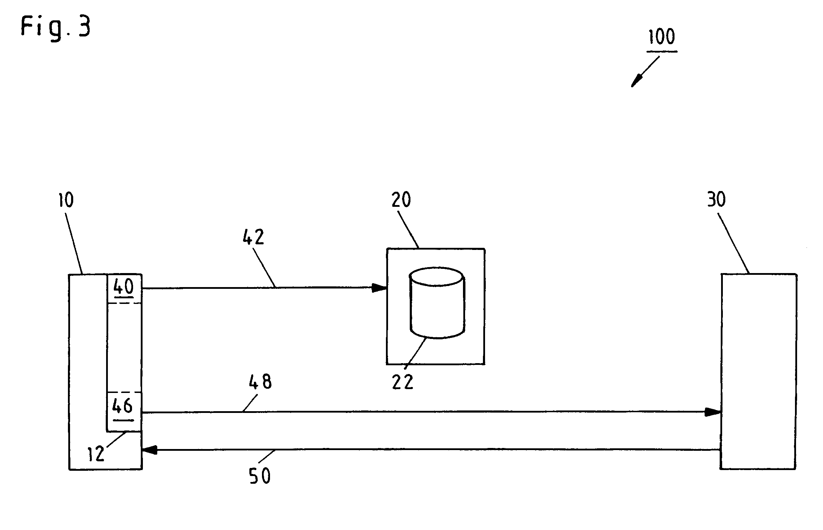

Beim dritten Ausführungsbeispiel gemäß Figur 3 erfolgt insoweit ein zum ersten Ausführungsbeispiel gemäß Figur 1 und zum zweiten Ausführungsbeispiel gemäß Figur 2 alternativer Kommunikationsablauf zwischen Telematikendgerät 10, S[ervice]A[ggregator] 20 und S[ervice]P[rovider] 30, als beim dritten Ausführungsbeispiel gemäß Figur 3 von einem Ausfall des S[ervice]A[ggregators] 20 aufgrund eines Wartungsintervalls ausgegangen wird; aus diesem Grunde ist der S[ervice]A[ggregator] 20 nicht in Betrieb.

Der Nutzer des Telematikendgeräts 10 ruft in diesem Telematikendgerät 10 aber einen vom S[ervice]P[rovider] 30 angebotenen Dienst mittels der Dienstevoranfrage oder mittels des Dienstevoraufrufs 42 zum ersten Mal auf, so daß dieser Dienst gemäß den Einstellungen des Telematikendgeräts 10 zunächst zu konfigurieren ist.

Demzufolge fragt das Telematikendgerät 10 zunächst den S[ervice]A[ggregator] 20 an. Da jedoch aufgrund des Ausfalls des S[ervice]A[ggregators] 20 von diesem keine Rückmeldung erfolgt, wird der Dienst bei der Diensteadresse 46 abgerufen, die in der Speichereinheit 12 des Telematikendgeräts 10 vorgegeben ist.

In diesem Falle stellt das Telematikendgerät 10 also ausgehend von der im Telematikendgerät 10 vorgehaltenen Diensteadresse 46 eine direkte Anfrage oder einen direkten Aufruf 48 an den zuletzt in der Speichereinheit 12 des Telematikendgeräts 10 gespeicherten S[ervice]P[rovider] 30, woraufhin das Diensteergebnis 50 vom Diensteanbieter 30 an das Telematikendgerät 10 übermittelt wird.

Zusammenfassend läßt sich also feststellen, daß beim vorstehend dargelegten Vorgehen in der Speichereinheit 12 des Telematikendgeräts 10 nicht nur die Zuordnungsdatenbankadresse 40 der Zuordnungsdatenbank 22, sondern erfindungsgemäß auch die jeweilige Diensteadresse 46 aller dem Telematikendgerät 10 zugeordneten Diensteanbieter 30 zur Verfügung stehen.

Dies hat den Vorteil, daß bei einem Ausfall des Serviceverdichters 20 und demzufolge bei einem Ausfall der Zuordnungsdatenbank 22 im Serviceverdichter 20 vom Telematikendgerät 10 alle (Dienste-)Anfragen bzw. alle (Dienste-)Aufrufe 48 unmittelbar an die Diensteanbieter 30 gestellt werden können (vgl. drittes Ausführungsbeispiel gemäß Figur 3), die im Telematikendgerät 10 gespeichert sind.

Dies bedeutet, daß im Falle eines Ausfalls des Serviceverdichters 20 und demzufolge im Falle eines Ausfalls der Zuordnungsdatenbank 22 im Serviceverdichter 20 weiterhin Dienste für das Telematikendgerät 10 zur Verfügung stehen, denn dann ist der entsprechende Diensteanbieter 30 direkt bekannt und kann demzufolge vom Telematikendgerät 10 angesprochen werden.

Das Telematikendgerät 10 kann also auch beispielsweise während eines Wartungsintervalls des Serviceverdichters 20 und demzufolge während eines Zeitraums, in dem die Zuordnungsdatenbank 22 nicht zur Verfügung steht, weiterhin auf die durch den S[ervice]P[rovider] 30 angebotenen Dienste zugreifen.

Wie vorstehend bereits ausgeführt, sind in vorteilhaften Weiterentwicklungen des vorliegenden Systems 100 gemäß den Figuren 1, 2 und 3 sowie des vorliegenden Verfahrens, auf dem dieses System 100 gemäß den Figuren 1, 2 und 3 beruht, folgende zueinander alternative oder sich ergänzende Ausgestaltungen möglich:
- Der Serviceverdichter 20 kann dazu eingesetzt werden, um dem Telematikendgerät 10 Daten, Informationen und/oder Mitteilungen zu übermitteln.
- Der Serviceverdichter 20 kann auch andere Einstellungen, wie etwa Einwahlnummern, rekonfigurieren oder Softwareupdates initiieren.
- Individuelle Konfigurationen eines Vertriebspartners des S[ervice]P[roviders] 30 können eingespielt werden, ohne daß produktionsseitig ein modifiziertes Telematikendgerät 10 herzustellen ist.

Hinsichtlich der Nachweisbarkeit der vorliegenden Erfindung kann vom Betreiber des vorliegenden Verfahrens wie auch des vorliegenden Systems 100 gemäß den Figuren 1, 2 und 3 ein Konfigurationsserver 20 eingesetzt werden.

Des weiteren können hinsichtlich der Nachweisbarkeit der vorliegenden Erfindung Einstellungen des Telematikendgeräts 10 ohne Eingriff des Nutzers verändert werden.

Des weiteren kann der Nutzer hinsichtlich der Nachweisbarkeit der vorliegenden Erfindung erforderlichenfalls eine manuelle Rekonfiguration starten.

Schließlich können hinsichtlich der Nachweisbarkeit der vorliegenden Erfindung bei Anfragen bzw. Aufrufen 42 und/oder 48 in bestimmten Zeitintervallen bzw. nach bestimmten Anfragenanzahlen längere Übertragungszeiten als üblich auftreten, weil zusätzliche Daten, Informationen und/oder Meldungen übertragen werden.

## Patentansprüche

1. Verfahren zum Zuordnen mindestens eines Diensteanbieters (30) zu mindestens einem Telematikendgerät (10) für eine serverbasierte dynamische Konfiguration dieses Telematikendgerätes (10),
**dadurch gekennzeichnet,**
**daß** im Telematikendgerät (10)
- sowohl die Zuordnungsdatenbankadresse (40) mindestens einer Zuordnungsdatenbank (22), mittels derer der Diensteanbieter (30) dem Telematikendgerät (10) zugeordnet wird,
- als auch die Diensteadresse (46) mindestens eines Diensteanbieters (30), insbesondere die Diensteadressen (46) sämtlicher dem Telematikendgerät (10) zugeordneter Diensteanbieter (30),
bereitgehalten werden, derart, dass eine Änderung einer Aufrufadresse(n) oder der Diensteadresse(n) automatisch im Telekmatikendgerät (10) erfolgen kann.

2. Verfahren gemäß Anspruch 1, **dadurch gekennzeichnet, daß** mindestens eine Dienstevoranfrage oder mindestens ein Dienstevoraufruf (42) vom Telematikendgerät (10) an die Zuordnungsdatenbank (22) übermittelt wird.

3. Verfahren gemäß Anspruch 2, **dadurch gekennzeichnet, daß** die Dienstevoranfrage oder der Dienstevoraufruf (42) Informationen
- hinsichtlich des Typs des angefragten Dienstes und/oder
- hinsichtlich des Typs des Telematikendgeräts (10) und/oder
- hinsichtlich der Version des Telematikendgeräts (10) und/oder
- hinsichtlich der Version der Software des Telematikendgeräts (10) enthält.

4. Verfahren gemäß Anspruch 2 oder 3, **dadurch gekennzeichnet,**
- **daß** die dem mittels der Dienstevoranfrage oder mittels des Dienstevoraufrufs (42) angefragten Diensteanbieter (30) zugeordnete Diensteadresse (44) von der Zuordnungsdatenbank (22) an das Telematikendgerät (10) übermittelt wird und
- **daß** die von der Zuordnungsdatenbank (22) an das Telematikendgerät (10) übermittelte Diensteadresse (44) im Telematikendgerät (10), insbesondere in mindestens einer Speichereinheit (12) des Telematikendgeräts (10), als neue Diensteadresse anstelle der im Telematikendgerät (10) bereitgehaltenen Diensteadresse (46) gespeichert wird.

5. Verfahren gemäß mindestens einem der Ansprüche 1 bis 4,
**dadurch gekennzeichnet,**
- **daß** auf Grundlage der neuen Diensteadresse (44) mindestens eine Diensteanfrage oder mindestens ein Diensteaufruf (48) vom Telematikendgerät (10) oder von der Zuordnungsdatenbank (22) an den Diensteanbieter (30) übermittelt wird und
- **daß** mindestens ein Diensteergebnis (50) vom Diensteanbieter (30) an das Telematikendgerät (10) übermittelt wird.

6. Verfahren gemäß mindestens einem der Ansprüche 1 bis 4,
**dadurch gekennzeichnet,**
- **daß** auf Grundlage der im Telematikendgerät (10) bereitgehaltenen Diensteadresse (46) mindestens eine Diensteanfrage oder mindestens ein Diensteaufruf (48) vom Telematikendgerät (10) an den Diensteanbieter (30) übermittelt wird und
- **daß** mindestens ein Diensteergebnis (50) vom Diensteanbieter (30) an das Telematikendgerät (10) übermittelt wird.

7. Telematikendgerät (10), wie etwa Fahrerassistenzsystem, Handheld, Mobiltelephon, Navigationsgerät, Palmtop, P[ersonal]D[igital]A[ssistant] oder dergleichen, zum Durchführen eines Verfahrens gemäß mindestens einem der Ansprüche 1 bis 6, welchem Telematikendgerät (10) mindestens ein Diensteanbieter (30) zuordbar ist,
**dadurch gekennzeichnet,**
**daß** das Telematikendgerät (10) angepasst ist, insbesondere in mindestens einer Speichereinheit (12) des Telematikendgeräts (10),
- sowohl die Zuordnungsdatenbankadresse (40) mindestens einer Zuordnungsdatenbank (22), mittels derer der Diensteanbieter (30) dem Telematikendgerät (10) zugeordnet wird,
- als auch die Diensteadresse (44) mindestens eines Diensteanbieters (30), insbesondere die Diensteadressen (44) sämtlicher dem Telematikendgerät (10) zuordbarer Diensteanbieter (30),
bereit zu halten, derart, dass eine Änderung einer Aufrufadresse(n) oder der Diensteadresse(n) automatisch im Telematikendgerät erfolgen kann.

8. System (100), mit Mitteln zum Durchführen eines Verfahrens gemäß mindestens einem der Ansprüche 1 bis 6, aufweisend
- mindestens eine Zuordnungsdatenbank (22) zum Zuordnen mindestens eines Diensteanbieters (30) zu mindestens einem Telematikendgerät (10),
- den mindestens einen Diensteanbieter (30) und
- das mindestens eine Telematikendgerät (10), in dem, insbesondere in mindestens einer Speichereinheit (12) desselben,
- sowohl die Zuordnungsdatenbankadresse (40) der mindestens einen Zuordnungsdatenbank (22),
- als auch die Diensteadresse (44) des mindestens einen Diensteanbieters (30), insbesondere die Diensteadressen (44) sämtlicher dem Telematikendgerät (10) zuordbarer Diensteanbieter (30), bereitgehalten werden, derart, dass eine Änderung einer Aufrufadresse(n) oder der Diensteadresse(n) automatisch im Telematikendgerat erfolgen kann.

9. System gemäß Anspruch 8, **dadurch gekennzeichnet, daß** die Zuordnungsdatenbank (22) mindestens einer Servereinheit (20), insbesondere mindestens einem vorzugsweise zentralen Diensteverdichter oder mindestens einem vorzugsweise zentralen Serviceverdichter, sogenannter S[ervice]A[ggregator], zugeordnet ist.

10. Verwendung mindestens eines Telematikendgeräts (10) gemäß Anspruch 7 als Teil mindestens eines einem Fortbewegungsmittel, insbesondere einem Kraftfahrzeug, zugeordneten Navigationssystems.

## Claims

1. Method for allocating at least one service provider (30) to at least one telematic terminal (10) for a server-based dynamic configuration of this telematic terminal (10),
**characterized in that,**
in the telematic terminal (10)
- both the allocation database address (40) of at least one allocation database (22), by means of which the service provider (30) is allocated to the telematic terminal (10),
- and the service address (46) of at least one service provider (30), particularly the service addresses (46) of all service providers (30) allocated to the telematic terminal (10),
are kept available in such a manner that a call address or addresses or the service address or addresses can be changed automatically in the telematic terminal (10).

2. Method according to Claim 1, **characterized in that** at least one prior service request or at least one prior service call (42) is conveyed from the telematic terminal (10) to the allocation database (22).

3. Method according to Claim 2, **characterized in that** the prior service request or the prior service call (42) contains information
- with regard to the type of the requested service and/or
- with regard to the type of the telematic terminal (10) and/or
- with regard to the version of the telematic terminal (10) and /or
- with regard to the version of the software of the telematic terminal (10).

4. Method according to Claim 2 or 3, **characterized in that**
- the service address (44) allocated to the service provider (30) requested by means of the prior service request or by means of the prior service call (42) is conveyed from the allocation database (22) to the telematic terminal (10), and
- the service address (44) conveyed from the allocation database (22) to the telematic terminal (10) is stored in the telematic terminal (10), particularly in at least one storage unit (12) of the telematic terminal (10), as a new service address instead of the service address (46) kept available in the telematic terminal (10).

5. Method according to at least one of Claims 1 to 4, **characterized in that**
- on the basis of the new service address (44), at least one service request or at least one service call (48) is conveyed from the telematic terminal (10) or from the allocation database (22) to the service provider (30), and
- at least one service result (50) is conveyed from the service provider (30) to the telematic terminal (10).

6. Method according to at least one of Claims 1 to 4, **characterized in that**
- on the basis of the service address (46) kept available in the telematic terminal (10), at least one service request or at least one service call (48) is conveyed from the telematic terminal (10) to the service provider (30), and
- at least one service result (50) is conveyed from the service provider (30) to the telematic terminal (10).

7. Telematic terminal (10), such as a driver assistance system, hand-held, mobile telephone, navigation device, palmtop, personal digital assistant or the like, for carrying out a method according to at least one of Claims 1 to 6, to which telematic terminal (10) at least one service provider (30) can be allocated,
**characterized in that**
the telematic terminal (10) is adapted to keep available, particularly in at least one storage unit (12) of the telematic terminal (10),
- both the allocation database address (40) of at least one allocation database (22), by means of which the service provider (30) is allocated to the telematic terminal (10),
- and the service address (44) of at least one service provider (30), particularly the service addresses (44) of all service providers (30) which can be allocated to the telematic terminal (10),
in such a manner that a call address or addresses or the service address or addresses can be changed automatically in the telematic terminal.

8. System (100) comprising means for carrying out a method according to at least one of Claims 1 to 6, having
- at least one allocation database (22) for allocating at least one service provider (30) to at least one telematic terminal (10),
- the at least one service provider (30) and
- the at least one telematic terminal (10), in which, in particular in at least one storage unit (12) thereof,
• both the allocation database address (40) of the at least one allocation database (22),
• and the service address (44) of the at least one service provider (30), particularly the service addresses (44) of all service providers (30) which can be allocated to the telematic terminal (10),
are kept available in such a manner that a call address or addresses or the service address or addresses can be changed automatically in the telematic terminal.

9. System according to Claim 8, **characterized in that** the allocation database (22) is allocated to at least one server unit (20), particularly to at least one preferably central service compressor, a so-called service aggregator.

10. Use of at least one telematic terminal (10) according to Claim 7 as part of at least one navigation system allocated to a means of transportation, particularly a motor vehicle.

## Revendications

1. Procédé pour associer au moins un prestataire de service (30) à au moins un terminal de télématique (10) pour une configuration dynamique fondée sur le service de ce terminal de télématique (10),
**caractérisé en ce que**
dans le terminal de télématique (10), on tient à disposition :
- à la fois l'adresse (40) d'au moins une banque de données associée (22) à l'aide de laquelle le prestataire de service (30) est associé au terminal de télématique (10),
- et aussi l'adresse de service (46) d'au moins un prestataire de service (30), notamment les adresses (46) de tous les prestataires de service (30) associés au terminal de télématique (10),
de façon qu'une modification d'une (des) adresse(s) d'appel ou de (des) l'adresse(s) de service se fasse automatiquement dans le terminal de télématique (10).

2. Procédé selon la revendication 1,
**caractérisé en ce qu'**
on transmet au moins une requête préalable de service ou au moins un appel préalable de service (42) du terminal de télématique (10) à la banque de données associée (22).

3. Procédé selon la revendication 2,
**caractérisé en ce que**
la requête préalable de service ou l'appel préalable de service (42) contiennent des informations concernant :
- le type de service demandé et/ou
- le type de terminal de télématique (10) et/ ou
- la version du terminal de télématique (10) et/ ou
- la version du programme du terminal de télématique (10).

4. Procédé selon la revendication 2 ou 3,
**caractérisé en ce que**
- l'adresse de service (44) associée au prestataire de service (30) interrogé par la requête préalable de service ou par l'appel préalable de service (42) est transmise par la banque de données associée (22) au terminal de télématique (10), et
- l'adresse de service (44) transmise par la banque de données associée (22) au terminal de télématique (10) est enregistrée en mémoire dans le terminal de télématique (10) notamment dans au moins une unité de mémoire (12) du terminal de télématique (10) comme nouvelle adresse de service à la place de l'adresse de service (46) déjà contenue dans le terminal de télématique (10).

5. Procédé selon les revendications 1 à 4,
**caractérisé en ce que**
- sur le fondement de la nouvelle adresse de service (44), au moins une requête de service ou au moins un appel de service (42) sont transmis par le terminal de télématique (10) ou par la banque de données associée (22) au prestataire de service (30), et
- au moins un résultat de service (50) est transmis par le prestataire de service (30) au terminal de télématique (10).

6. Procédé selon les revendications 1 à 4,
**caractérisé en ce que**
- sur le fondement de l'adresse de service (46), on transmet au moins une requête de service ou au moins un appel de service (48) à partir du terminal de télématique (10) vers le prestataire de service (30), et
- on transmet au moins un résultat de service (50) du prestataire de service (30) vers le terminal de télématique (10).

7. Terminal de télématique (10) tel que système d'assistance de conducteur, téléphone main-libre, téléphone mobile, appareil de navigation, Palmtop, assistant numérique personnel PDA ou moyens analogues, pour la mise en oeuvre d'un procédé selon au moins les revendications 1 à 6, associant au moins un prestataire de service (30) à ce terminal de télématique (10),
**caractérisé en ce que**
le terminal de télématique (10) est adapté, notamment pour tenir à disposition dans au moins une unité de mémoire (12) du terminal de télématique (10),
- à la fois l'adresse (40) d'au moins une banque de données associée (22), à l'aide de laquelle le prestataire de service (30) est associé au terminal de télématique (10),
- ainsi que l'adresse de service (44) d'au moins un prestataire de service (30) notamment les adresses de service (44) de tous les prestataires de service (30) associés au terminal de télématique (10),
- de façon qu'une modification d'une (des) adresse(s) d'appel ou de (des) l'adresse(s) de service se fasse automatiquement dans le terminal de télématique.

8. Système (100) comportant des moyens pour mettre en oeuvre un procédé selon les revendications 1 à 6, comprenant :
- au moins une banque de données, associée, (22) pour associer au moins un prestataire de service (30) à au moins un terminal de télématique (10),
- au moins un prestataire de service (30),
- au moins un terminal de télématique (10) dont notamment au moins une unité de mémoire (12) tient à disposition à la fois,
- l'adresse (40) d'au moins une banque de données associée (22), et
- aussi l'adresse de service (44) d'au moins un prestataire de service (30) notamment les adresses de services (44) de tous les prestataires de service (30) associés au terminal de télématique (10), de façon qu'une modification d'une (des) adresse(s) d'appel ou de (des) l'adresse(s) de service se fasse automatiquement dans le terminal de télématique.

9. Système selon la revendication 8,
**caractérisé en ce que**
la banque de données associée (22) d'au moins une unité de service (20) notamment de préférence un compresseur central de service ou au moins de préférence un compresseur central de service appelé (SA Aggrégateur de Service) soit associé.

10. Utilisation d'au moins un terminal de télématique (10) selon la revendication 7 comme partie d'au moins un système de navigation associé à un moyen de transport notamment un véhicule automobile.
